# EUROPEAN PATENT APPLICATION

(11) **EP 0 558 825 A1**
(43) Date of publication of application: **08.09.1993**
(21) Application number: 92200612.7
(22) Date of filing: 03.03.1992
(51) Int. Cl.: G01T 1/00, G01T 1/29

(54) **A method of recording a penetrating radiation image**

(71) Applicant: AGFA-GEVAERT naamloze vennootschap, B-2640 Mortsel (BE)
(72) Inventor: Primo,Henri,c/o Agfa-Gevaert N.V.,DIE 3800, B-2640 Mortsel (BE)

(57) **Abstract**

A method of recording a penetrating radiation image projected simultaneously or sequentially sectionwise to represent a full frame image which method comprises the step of scanning said radiation image with a plurality of fixedly linked line arrays of photosensors each array comprising a multitude of electric charge injecting photosensors each being connected to a charge transferring element to sequentially output an electric charge obtained by irradiation of the therewith connected photosensor, wherein (1) said scanning proceeds by moving said arrays in a straight line course perpendicularly or obliquely to them, and said arrays are arranged parallel to each other in the same plane at a distance not more than one third of the diameter or length of the full frame image in the plane wherein said arrays perform the scanning, (2) and wherein in said scanning the displacement of said arrays proceeds over a distance such that each of said arrays scans only a part of said full frame image without or without substantially interfering with the part scanned by a neighbouring array, and (3) during said scanning the source emitting penetrating radiation is fixed in place with respect to the object to be radiographed.

## Description

### 1. Field of the Invention

The present invention relates to a method of electronically recording images of penetrating radiation and apparatus suited therefor.

### 2. Background of the Invention

In radiography the interior of objects is reproduced by means of penetrating radiation, which is high energy radiation also known as ionizing radiation belonging to the class of X-ray, gamma-ray, and high energy elementary particle radiation, e.g. beta-ray, electron beam or neutron radiation.

In conventional radiography the X-ray image is captured by a flat rectangular sheet of light-emitting phosphor material which is commonly called an X-ray conversion screen or X-ray intensifying screen and which fluoresces when struck by X-rays. The fluorescent light emitted by the screen exposes a silver halide emulsion film wherein a silver image reproducing the X-ray image information is developed.

The X-ray exposure applied in combination with a screen-film assemblage is a full frame non-scanning projection exposure in that the object to be radiographed in all its parts is penetrated simultaneously by the x-ray radiation before reaching said assemblage.

Film-screen images are mostly viewed directly on a viewbox and bring about a serious archival storage problem that may be solved by scanning and digitizing the information and storing it on magnetic tape or optical disk.

There is a trend nowadays to perform the imaging electronically and to replace the film as photographic medium by electronic photosensing devices.

One of the main problems is to find a two-dimensional array electronic X-ray sensitive image receptor that can compete with the film in image reproduction quality, mainly image noise and resolution.

A two-dimensional or large area photo-electronic image receptor at present in widespread use for digital radiography is the image intensifier/video camera system. Spatial resolution, detectable exposure range, display latitude, and image format size are less than what is required. Their use is principally restricted to studies of dynamic motion (ref. the chapter "Medical Imaging" in the book "Imaging Processes and Materials, Neblette's Eighth Edition - Van Nostrand Reinhold New York (1989), p. 511.

In the recent past miniaturized solid-state photo-electronic sensing elements, e.g. photo-diodes, and circuitry have been developed showing significant advantages over vacuum-tube sensors. Their application in linear or line sensors and large area sensors has been made possible by the use of a charge coupled device (CCD). A charge-coupled device allows multiplexing of individual charges created in elementary pixel-type photosensors, e.g. photodiodes. The theory, circuitry and use in combination with image sensors of charge-coupled devices is given e.g. in Scientific American, February, 1974, p. 23-31 and in the Proceedings of IEEE, Vol. 63, No. 1, January 1975, p. 38-67.

According to US-P 4,995,062 linear CCD sensors arranged in columns are used in dental X-ray diagnostics for producing panorama tomograms of the jaw of a patient. Clocked CCD sensors generate electrical signals proportional to the received X-ray radiation intensity. For the purpose of acquiring exposures of a number of different jaw slices at different depths of field during one exposure, at least some of the CCD columns are driven with different clock frequencies by separate clock inputs.

Published PCT patent application WO 91/09495 relates to a radiographic system for spectroscopic imaging of bodily tissue in which a scintillation screen and charge coupled device camera is used. The scintillation screen radiates a visible spatial intensity pattern corresponding to the X-ray image or radionuclide distribution in bodily tissue and the visible light pattern is optically detected by a two-dimensional CCD-photosensor device present in a still video camera. Said system is a full frame simultaneous (non-scanning) imaging system depending in resolution mainly on the pixel format size of the photosensors, their number per cm² and the imaging quality (light-scatter) of the scintillator plate.

According to a scanning mode described in said book Neblette's Eighth Edition, p. 509-511 radiography can be performed with wide scanning X-ray fan beams using lens-coupled CCD-arrays receiving light from a fluorescent X-ray conversion screen.

According to another embodiment (see pages 67 and 68 of said book) a solid state linear X-ray detector is used comprising a linear array of silicon photodiodes having an overlaying scintillator coating to convert the X-rays into visible radiation sensed by the silicon. Images are obtained by scanning against the detector array. The detector array contains 1024 pixel detectors with a detection pitch of 0.225 mm and a total sensitive length of 230 mm. The detector is an assembly of 8 arrays in line of each 128 silicon photodiodes. The photodiode arrays are multiplexed by silicon charge transfer devices.

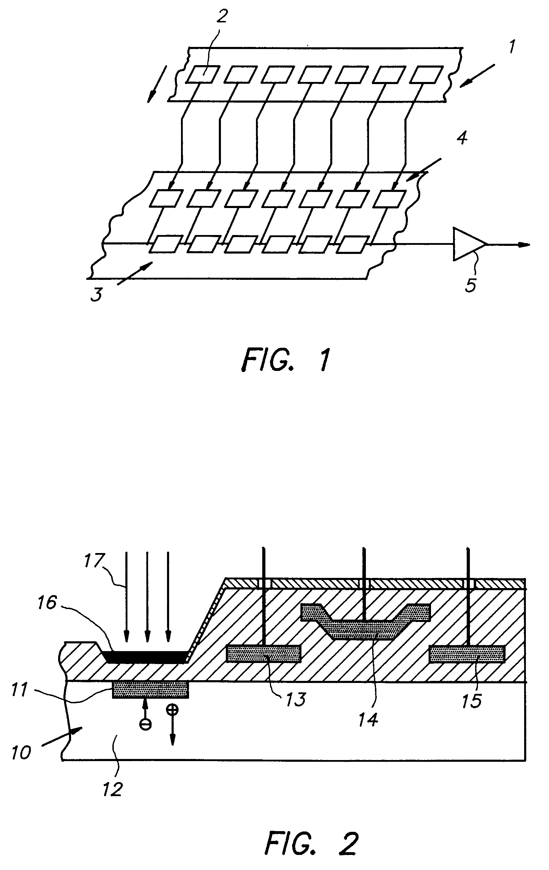

In NDT International Vol. 23, 4 Aug. 1990, p. 214-220 containing the article "A quantitative comparison between linear X-ray sensitive array and image-intensifier systems" the general lay-out of a real-time linear array (LA) system is illustrated in Fig. 2. In said system a two-dimensional image of the whole object to be radiographed is obtained by displacing the linear detector cell corresponding with a section of the object at a constant speed (3 cm s⁻¹) in the direction perpendicular to the detector. The 1024 point linear detector discussed has a sensitive cell size of 0.225x0.5 mm and a total sensitive length of 230 mm., The line acquisition time is 8 ms. So, for an image of 1024x512 eight bit pixels the total acquisition time is about 4 s.

At that scanning speed image deformation may not be neglectable when radiographing moving objects as may be the case in medical radiography of living organs. Therefore efforts have to be made to reduce image distortion or blur of moving objects when scanning with a linear photo-electronic detector device. Moreover, in medical radiography scan times should be as short as possible to reduce the penetrating radiation dose to which the patient is exposed. Shorter scan times reduce the load on the X-ray tube and economize on electrical energy.

### 3. Summary of the Invention

It is an object of the present invention to provide a radiographic method operating with a scanning photo-electronic detector device offering a considerably reduced scan time in the detection of a simultaneous or sequentially sectionwise projected full frame radiographic image.

It is another object of the present invention to provide a fast-scanning photo-electronic detector apparatus suited for radiographic imaging.

Other objects and advantages of the present invention will become clear from the further description and drawings.

According to the present invention a method of recording a penetrating radiation image projected simultaneously or sequentially sectionwise to represent a full frame image comprises the step of scanning said radiation image with a plurality of fixedly linked line arrays of photosensors each array comprising a multitude of electric charge injecting photosensors each being connected to a charge transferring element to sequentially output an electric charge obtained by irradiation of the therewith connected photosensor, wherein (1) said scanning proceeds by moving said arrays in a straight line course perpendicularly or obliquely to them, and said arrays are arranged parallel to each other in the same plane at a distance not more than one third of the diameter or length of the full frame image in the plane wherein said arrays perform the scanning, (2) and wherein in said scanning the displacement of said arrays proceeds over a distance such that each of said arrays scans only a part of said full frame image without or without substantially interfering with the part scanned by a neighbouring array, and (3) during said scanning the source emitting penetrating radiation is fixed in place with respect to the object to be radiographed.

The present invention includes also an apparatus suited for recording a penetrating radiation image projected simultaneously or sequentially sectionwise to represent a full frame image, wherein said apparatus comprises :
1) a fixed in place penetrating radiation source projecting a beam of penetrating rays covering a full frame image to be recorded,
(2) an assemblage of at least three fixedly linked separate line arrays of charge injecting photosensors wherein each photosensor is connected to a charge transferring element to sequentially output an electric charge obtained by irradiation of the therewith connected photosensor, and wherein each line array of said photosensors is in parallel position to all the other arrays, and
(3) a means for moving said assemblage in straight line course in such a way that during simultaneous displacement of said fixedly linked line arrays each of said line arrays only scans a part of said full frame image without or without substantially interfering with the part scanned by a neighbouring photosensor array.

### 4. Short description of the drawings

Fig. 1 represents a schematic diagram of the use of a CCD array as charge transferring element to sequentially transfer charge packets obtained in a single row of photodiode detectors.

Fig. 2 represents a a schematic sectional drawing of an elementary part of a photodiode-CCD structure suited for X-ray recording.

Fig. 3 represents a diagrammatic top view of a carriage comprising an assemblage of three fixedly linked line arrays of photosensors each comprising a multitude of photosensors in straight line.

Fig. 4 represents a schematic drawing of a mechanism suited for transferring reciprocating straight line motion to said carriage.

Fig. 5 represents a schematic drawing of an X-ray image recording system according to the present invention wherein a full frame X-ray beam of a stationary (with respect to the object to be radiographed) X-ray source is divided into subsequent lines before striking the object to be radiographed by using a scanning multiple slit collimator moving synchronously with an assemblage of fixedly linked line array photosensor units.

### 5. Detailed description of the Invention

According to one embodiment of an X-ray recording system according to the present invention a full frame image of penetrating radiation is obtained by a flood (flash) of X-rays imagewise modulated by simultaneously penetrating a whole stationary object or part thereof to be radiographed.

According to another embodiment said full frame image of penetrating rays is produced by radionuclide distribution in a body.

According to a further embodiment of an X-ray image recording system according to the present invention a full frame X-ray image is formed by a flood of X-rays from a stationary (with respect to the object to be radiographed) X-ray source which flood is divided into consecutive linear sections before striking the object to be radiographed by using a scanning multiple slit collimator grid moving synchronously with an assemblage of fixedly linked line arrays of photosensors, each array reading out a different section of the penetrating radiation image, said sections representing together a full frame image.

The readout of charge obtained by photoexposure of each electronic photosensor proceeds by known charge transferring elements capable of sequentially transferring electric charges from separate photosensor pixels. For that purpose preference is given to charge coupled devices (CCDs), but other devices known for charge transfer such as charge-injection devices (CID) [ref. US-P 4,413,280 and said Neblette's Eighth Edition, p. 59] may be used.

The use of CCDs or CIDs in the detection of a radiation image, more particularly an X-ray image, with numerous photosensitive elements in regular and two-dimensional arrangement (large area) is described e.g. in US-P 4,803,359 and published European Patent Application 0 126 417.

Charge-coupled-devices (CCDs) now widely used in photosensor arrays provide a readout circuitry in which tiny charge packets, that are built up by tiny photosensor elements during their photo-exposure in the form of elementary picture elements (pixels), are transformed in sequential electrical signals that can be stored e.g. magnetically.

A CCD is essentially a string of closely spaced MOS (metal oxide semiconductor) capacitors, in which these capacitors are placed so close together that their depletion regions overlap and their potential wells merge or "couple", whereby any mobile minority charge will accumulate at the location with the highest interface potential. This process provides the possibility of transferring charge packets in a controlled manner from one electrode to an adjacent one. Several such electrodes can be tied together in a periodic manner by applying a periodically varying voltage, called "clock" voltage, to the electrodes whereby the charge packets move towards an output electrode connected to a charge-voltage converter.

The photosensor elements are preferably photodiodes in which charge charge and therewith corresponding current is produced by the photovoltaic effect. The photodiodes may be of the p-n junction type, may be PIN photodiodes characterized by a layer-sequence of p-type amorphous silicon, intrincic (non-doped) amorphous silicon and n-type amorphous silicon described e.g. in Electronic Vademecum - Kluwer Technische Boeken B.V. Deventer - (Holland), Antwerp - (Belgium), (1980), p. 190-192 and on page 9 of published European Patent Application 0 126 417.
Particularly suited are fast switching Schottky-barrier diodes, also known as Schottky-diodes in which there is no p-n junction. In said diodes amorphous (α-Si:H) silicon is directly sensitive to visible light emitted by a fluorescent X-ray conversion screen. The properties an construction of a Schottky-diode are discussed e.g. in Electronic Vademecum - Kluwer Technische Boeken B.V. Deventer - (Holland), Antwerp - (Belgium), (1980), p. 104-105. On page 158 of said Electronic Vademecum and in a published European patent Application (EP-A) 0 441 521 the Schottky-diode is described for use in conjunction with a Field Effect Transistor (FET) being a thin film transistor (TFT). The production of Schottky-diodes suited for use as photosensor is described e.g. in published European Patent Application 0 438 889.

Photodiodes that are not directly sensitive enough to X-rays have for use in the detection of X-ray images to be coated or put in close proximity with a scintillator material (phosphor) transforming X-rays into photons whereto the photodiode is much more sensitive than to X-rays.

Where possible the charge transfer section, e.g. CCD shift register, for moving the photo-generated charge packets in a sequential way to an output electrode should be shielded for X-rays as described e.g. in US-P 4,810,881.

Fig. 1 represents a schematic diagram of the use of a CCD array to multiplex the charge packets obtained in photodiode detectors. The array 1 of individual photosensors (photodiodes) 2 is exposed to imagewise modulated light and the charges created by said exposure are separated from the charge-coupled shift register 3 by pulsewise periodically operated transfer gates 4. The output side of the CCD shift register 3 is connected to a charge-voltage convertor 5. The scan direction is given by the arrow at the left of the device.

More detailed structures of linear photosensitive imaging arrays are illustrated in Proceedings of IEEE, Vol. 63, No. 1, January 1975, p. 50-51, Fig. 28 and 29 which represent respectively a linear CCD imaging array with single readout register and a linear CCD imaging array with double readout register. Linear CCD sensors are further described in IEE Journal of Electronic Engineering, June 1979, p. 44-46.

Fig. 2 represents a schematic sectional drawing of an elementary part of a common photodiode-CCD structure. In operation the photogate voltage under a silicon photodiode 10 (comprising a region 11 of n-type silicon imbedded in a substratum of p-type silicon 12) is held high by a collector electrode 13 and the charge generated by the incident radiation in each photodiode 10 is accumulated for a certain integration time. At the end of the integration time the transfer-gate voltage of the transfer electrode 14 is raised from its normally low voltage condition and charge moved to the right under a charge-coupled shift-register electrode 15 which together with following shift-register electrodes (perpendicular to the drawing sheet) is clocked for the purpose of sequentially reading out the charge pattern of the whole linear array of photodiodes. As is the case with the shift-register electrodes the photodiode 10 and the electrodes 13, 14 and 15 are repeated in a row perpendicular to the drawing sheet. The electrodes 13, 14 and 15 are on top of or buried in a layer of electrically insulating silica (SiO₂).

In order to transform a visible-light-sensitive silicon type photodiode detector into an X-ray sensitive detector, the photosensitive area of the photodiode is coated with a scintillator material 16 converting X-rays 17 into photons to which the silicon is sensitive. The spectral sensitivity spectrum of silicon is given in the already mentioned periodical Scientific American p. 29. From the relative response versus wavelength curve can be learned that the silicon is particularly sensitive in the visible light region between 500 and 600 nm, so that phosphors emitting green light are particularly useful as scintillator material.

The coating of said scintillator material may proceed by vacuum-deposition through a mask or by electrophoretic deposition as described e.g. in US-P 3,681,222 for producing luminescent screens.

Suitable scintillator material is e.g. vacuum-deposited thallium activated CsI covered with an impermeable protective layer (ref. e.g. Dutch patent 86 2 021 and EP 291 299) or is formed by electrophoretically deposited Gd₂O₂S:Tb phosphor particles on a transparent conductive substrate as described e.g. in J. Electrochem. Soc., Vol. 136, No. 9, Sept. 1989, p. 2724-2727. Terbium activated lanthanum or gadolinium oxysulphide phosphors are emitting green light with emission peaks at 490 and 540 nm when struck by X-rays as described in US-P 4,130,428 and terbium activated gadolinium phosphors are also emitting visible light when struck by neutrons as described in US-P 3,891,852.

In contradistinction to the embodiment wherein the scintillator or phosphor is situated individually over each photodiode pixel a conventional (full frame) phosphor screen can be used in fixed overlay or is laminated onto the assemblage of the fixedly linked photosensor line arrays.

In order to avoid light spreading the phosphor layer of the screen may be divided in columnar area corresponding with the line arrays of the photosensors. By said embodiment the thickness (coverage) of the phosphor deposit in the screen can be increased without loss in image sharpness when the arrays are not too close to each other. Increasing the phosphor coverage provides greater absorption of incident X-rays thereby improving the sensitivity of the detector.

Techniques for producing columnar phosphor screens are described in published European Patent Application 0 175 578, Columnar phosphor screens including oxysulfides of gadolinium or lanthanum are described in US-P 4,069,355, and columnar phosphor screens an alkali halide type phosphor are described in US-P 5,055,681.

Direct conversion of X-rays without scintillator material in X-ray sensors coupled to a CCD-shift register element is described in EP 266 819 and EP 229 497. According to (published PCT) WO 91/10921 impinging X-rays can be produce free (photo)electrons that can be accumulated and serially transported (shifted) with CCD MOS capacitors to a common output.

In an embodiment of an apparatus according to the present invention at least three, preferably at least 6, separate line arrays of photosensors are fixedly arranged with their linear photodiode arrays in parallel position in a frame making part of a carriage capable of reciprocating on and/or between guide means.

The carriage may be moved on wheels or slide shoes guided by tracks.

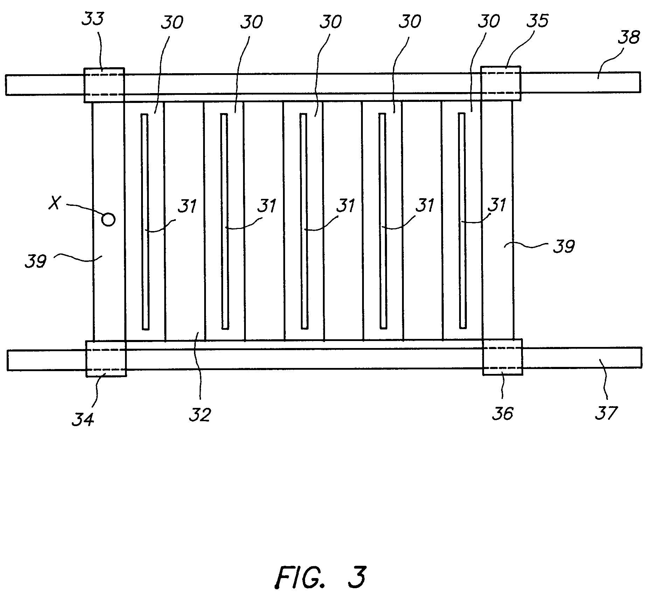

Fig. 3 represents a diagrammatic top view of a carriage comprising an assemblage of five individual units 30 comprising each a linear array 31 of photodiodes coupled to their CCD shift register(s). Said units 30 are fixedly connected to a common frame plate 32 that is provided with frame bars 39 ending in sleeves 33, 34, 35 and 36 to allow the reciprocating movement of said units 30 on guide bars 38.

In order to obtain uniform scanning speed the carriage has to be driven at constant speed at least in the period wherein the parallel photosensor arrays cross the projected X-ray image.

Constant speed straight line course motion of said carriage may be obtained by connecting the carriage to a travelling nut on screw bar which is driven rotatively at constant angular speed with a constant speed motor or with a step-motor when the scanning proceeds at small intervals corresponding e.g. with the integration time of the photocharges before clocking them in their CCD shift-register(s).

According to another embodiment said carriage can be reciprocated by a mechanism described e.g. in the book "Machine Devices and Instrumentation" edited by Nicholas P. Chironis, Mc Graw-Hill Book Company - New York, 1966, p. 54-55 used on winding machines to reciprocate the thread guide. In such winding machines the thread guide obtains reciprocating motion through a pointed cam shoe or cam roll that runs in a cam groove element rotatively driven at constant angular speed.

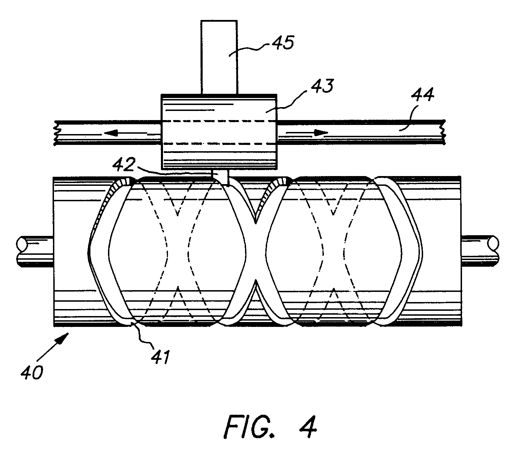

Fig. 4 illustrates a mechanism suited for producing reciprocating motion of the carriage of Fig. 3. In said mechanism a roll 40 having a continuous groove 41 is rotationaly driven at constant angular speed by means of a synchronous motor (not shown in the drawing). Optionally gears are used to determine a desired angular speed. A cam shoe 42 following the groove 41 drives a sleeve 43 in reciprocating motion along a stationary guiding bar 44. The sleeve 43 is connected by means of a pin 45 to the centre X of the frame bar 39 of frame plate 32 of the carriage respresented in Fig. 3.

The pitch of the frame movement is determined by the pitch of the cam groove which is chosen such that their is no or only slight overlap of the scanning positions of the linear photosensor arrays.

For example when using 9 linear array units on the carriage to cover an X-ray image projection frame having a length of 45 cm each individual unit (which means each linear CCD-coupled photosensor array) has to move in the scan direction only 5 cm to detect the whole image frame. Since the movement is rapidly reciprocating a plurality of images as in cinematography can be recorded. By interrupting (mechanically or electronically) the output signal series at the point at which the carriage changes direction it is possible to record a single frame image.

In a radiographic apparatus for medical diagnostic use said carriage and guide means are arranged preferably under the table-leaf of the table supporting the patient, such in the position where in conventional radiography the screen-film cassette is inserted. The radiographic apparatus according to the present invention does not require anymore the loading or unloading of cassettes so that patient throughput can be speeded up considerably and less operating personel is required.

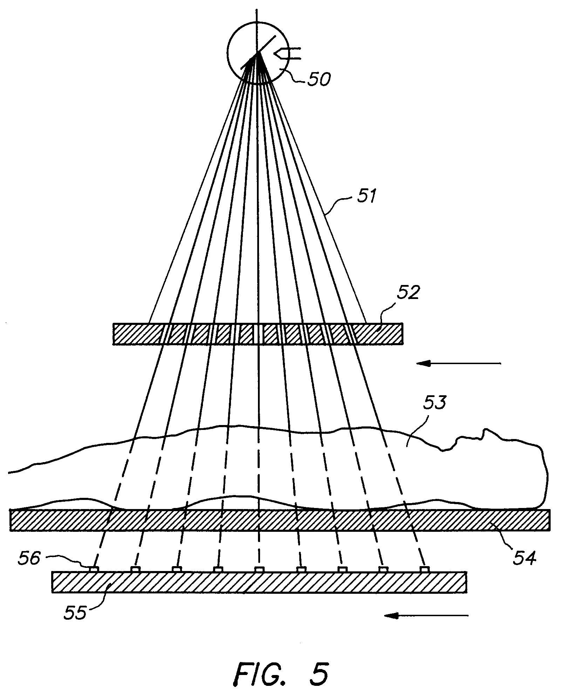

In Fig. 5 such a radiographic apparatus is represented in a diagramatic cross-sectional view. Therein element 50 represents a stationary X-ray source for producing a full frame X-ray beam 51. Said full frame X-ray beam 51 is divided by a moving multiple slit collimator grid 52 into consecutive lines before striking the object or body 53 carried by table top 54 of a universal medical radiographic apparatus for examination of the patient in lying position (ref. e.g. Fig. 9.1 and 9.2 of the book "X-ray Equipment for Student Radiographers" by D. N. & M. O. Chesney - Blackwell Scientific Publications - Oxford and Edinburgh (1971).

During the X-ray exposure said grid 52 is moved synchronously together with a carriage 55 having thereto fixedly linked line array photosensor units 56 which during said movement remain in line each with the axis of symmetry of their most proximate slit.

The reciprocating motion of a slit-type grid by an "oscillating" drive mechanism to remove scattered X-rays is described e.g. in "Medical X-Ray Techniques in Diagnostic Radiology" Fourth Edition, by G. J. van der Plaats, Published by The Macmillan Press Ltd, London (1980), p. 122 and mechanisms suited therefor are described in the already mentioned book "X-ray Equipment for Student Radiographers", p. 311-317.

The group of serial signals that emerge simultaneously from the parallel CCD-coupled photosensor units have to be recorded in the right sequence to built the complete image.

According to one embodiment the group of obtained serial signals is sent into different delay lines to produce a serial data stream in the right sequence. The use of charge coupled devices for building said delay lines has been discussed in the book "Charge-Coupled Devices: Technology and Applications", edited by Roger Melen and Dennis Buss, IEEE Press - The Institute of Electrical and Electronic Engineers, Inc. New York (1976), page 334 under the heading 3.2 Parallel In/ Serial Out. In connection therewith further reference is made to T.F. Cheek, Jr., et al., "Design and Performance of Charge-Coupled Device Time-Division Analog Multiplexers", 1973 CCD Applications Conference, Sept. 1973, San Diego, CA, p.127 of Technical Papers Digest.

According to another embodiment each group of serial signals is recorded in a separate memory, e.g. magnetic disk or tape, using identification signals to identify each group of series of signals, which are played back in the right serial sequence for storing in an accumulator memory wherefrom the complete image can be displayed.

The obtained serial signal can be used in analog or digital form for display on a cathode ray tube or can be used to print the image information with electronically driven non-impact printer, e.g. thermal printer, laser printer or light-emitting diode printer. Various non-impact printing devices operating with electronic input signals are described in the above mentioned Neblette's Eighth Edition in Chapter 13.

The obtained image information when represented in digital form can be subjected to known "digital image processing" as described e.g. in Diagnostic Imaging July 1982, p. 27-35 and Optical Engineering September/October 1982/ Vol. 21, No. 5, p. 841-846, By such processing image contrast can be changed and by detail enhancement diagnostic interpretation may be improved.

## Claims

1. A method of recording a penetrating radiation image projected simultaneously or sequentially sectionwise to represent a full frame image which method comprises the step of scanning said radiation image with a plurality of fixedly linked line arrays of photosensors each array comprising a multitude of electric charge injecting photosensors each being connected to a charge transferring element to sequentially output an electric charge obtained by irradiation of the therewith connected photosensor, wherein (1) said scanning proceeds by moving said arrays in a straight line course perpendicularly or obliquely to them, and said arrays are arranged parallel to each other in the same plane at a distance not more than one third of the diameter or length of the full frame image in the plane wherein said arrays perform the scanning, (2) and wherein in said scanning the displacement of said arrays proceeds over a distance such that each of said arrays scans only a part of said full frame image without or without substantially interfering with the part scanned by a neighbouring array, and (3) during said scanning the source emitting penetrating radiation is fixed in place with respect to the object to be radiographed.

2. Method according to claim 1, wherein the penetrating radiation is X-ray radiation.

3. Method according to claim 1 or 2, wherein said full frame image is represented by a flash of X-rays imagewise modulated by simultaneously penetrating a whole stationary object or part thereof to be radiographed.

4. Method according to claim 1 or 2 , wherein said full frame image is represented by penetrating rays produced by radionuclide distribution in a body.

5. Method according to claim 1 or 2, wherein a full frame X-ray image is formed by a flood of X-rays from a stationary (with respect to the object to be radiographed) X-ray source which flood is divided into consecutive lines before striking the object to be radiographed by using a scanning multiple slit collimator grid moving synchronously with an assemblage of said fixedly linked line arrays each reading out a different group of line images representing together said full frame image.

6. Method according to any of the preceding claims, wherein said scanning proceeds by reciprocating motion of said line arrays of photosensors.

7. Method according to any of the preceding claims, wherein the group of serial signals obtained from each line array of photosensors is sent into different delay lines to produce a serial data stream in the right sequence for correct image reproduction.

8. Method according to claim 7, wherein charge coupled devices serve to form said delay lines.

9. An apparatus suited for recording a penetrating radiation image projected simultaneously or sequentially sectionwise to represent a full frame image, wherein said apparatus comprises :
1) a fixed in place penetrating radiation source projecting a beam of penetrating rays covering a full frame image to be recorded,
(2) an assemblage of at least three fixedly linked separate line arrays of charge injecting photosensors wherein each photosensor is connected to a charge transferring element to sequentially output an electric charge obtained by irradiation of the therewith connected photosensor, and wherein each line array of said photosensors is in parallel position to all the other arrays, and
(3) a means for moving said assemblage in straight line course in such a way that during simultaneous displacement of said fixedly linked line arrays each of said line arrays only scans a part of said full frame image without or without substantially interfering with the part scanned by a neighbouring photosensor array.

10. Apparatus according to claim 9, wherein a full frame X-ray image is formed by a flood of X-rays from a stationary (with respect to the object to be radiographed) X-ray source which flood is divided into consecutive linear sections before striking the object to be radiographed by using a scanning multiple slit collimator grid moving synchronously with an assemblage of fixedly linked line arrays of photosensors, each array reading out a different section of the penetrating radiation image, said sections representing together a full frame image.

11. Apparatus according to claims 9 or 10, wherein said photosensors are photodiodes.

12. Apparatus according to claim 11, wherein said photodiodes contain amorphous silicon as light-sensitive element.

13. Apparatus according to claim 12, wherein said photodiodes are Schottky-barrier diodes.

14. Apparatus according to any of claims 11 to 13, wherein said photodiodes at their photosensitive side are coated with a scintillator material transforming X-rays into photons whereto the photodiode is much more sensitive than to X-rays.

15. Apparatus according to claim 14, wherein said photodiodes are coated by vacuum-deposition with said scintillator material.

16. Apparatus according to claim 14, wherein said photodiodes are coated by electrophoretic deposition with said scintillator material.

17. Apparatus according to 14, wherein a conventional phosphor screen is present in overlay or is laminated onto the assemblage of the fixedly linked line arrays of photosensors.

18. Apparatus according to 14, wherein the line arrays of the photosensors are arranged in congruency with columnar area of a phosphor screen.

19. Apparatus according to any of the claims 9 to 18, wherein at least three separate line arrays of photosensors are fixedly arranged with their linear photodiode arrays in parallel position in a frame making part of a carriage arranged for straight line motion on and/or between guide means.

20. Apparatus according to claim 19, wherein said carriage obtains constant speed straight line course motion through a nut driven by a screw bar rotating at constant angular speed.
